(19) European Patent Office

Europäisches Patentamt

Office européen des brevets

(11) **EP 1 041 553 A1**

(12) **EUROPEAN PATENT APPLICATION**

(43) Date of publication:
04.10.2000 Bulletin 2000/40

(51) Int. Cl.$^7$: **G11B 19/12**

(21) Application number: 00302237.3

(22) Date of filing: 20.03.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 30.03.1999 KR 9910952

(71) Applicant:
**SAMSUNG ELECTRONICS CO., LTD.**
**Suwon-City, Kyungki-do (KR)**

(72) Inventor: **Hwang, Yong-Ha**
**Sungnam-city, Kyungki-do (KR)**

(74) Representative:
**Chugg, David John**
**Appleyard Lees,**
**15 Clare Road**
**Halifax, West Yorkshire HX1 2HY (GB)**

(54) **Apparatus for discriminating between different types of optical disc and method of discrimination therefor**

(57) An optical disc discrimination apparatus and method can discriminate a type of a disc loaded on a DVD-RAM drive accurately and simply. The optical disc discrimination apparatus includes a RF envelope generator (13) for generating an envelope signal from a RF signal read from a loaded disc at an off-track state, when only a focusing is accomplished prior to performing a tracking control, an envelope amplitude detector (22) for detecting the amplitude of the detected envelope signal, and a disc discriminator (24) for comparing the amplitude of the detected envelope signal with predetermined reference level and discriminating whether the disc is a CD, a DVD-ROM, or a DVD-RAM, based on the comparison result. Thus, a type of the disc can be discriminated simply and accurately with a change in the amplitude of the RF signal.

FIG. 2

EP 1 041 553 A1

**Description**

The present invention relates to an apparatus for discriminating an optical disc and a method therefor.

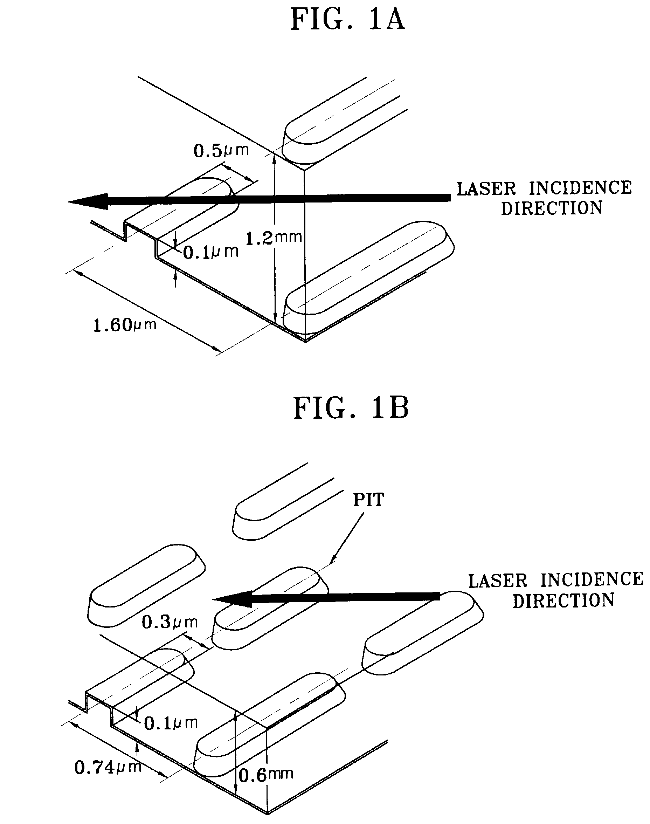

A digital versatile disc (DVD) can record a large amount of information and provide a high picture quality in comparison with a compact disc (CD). As a result, DVDs have come into the spotlight as a storage medium of the next generation. A recent form of DVD is a DVD-RAM free of recording and deletion of data. A DVD-RAM drive apparatus reproducing the DVD-RAM includes an optical pickup compatible with a DVD and a CD so that signals recorded on read only DVDs (DVD-ROM) as well as DVD-RAMs and CDs having a relatively large track pitch, can be reproduced. Track structures of the types of discs which can be reproduced from the DVD-RAM drive apparatus are shown in Figures 1A through 1C.

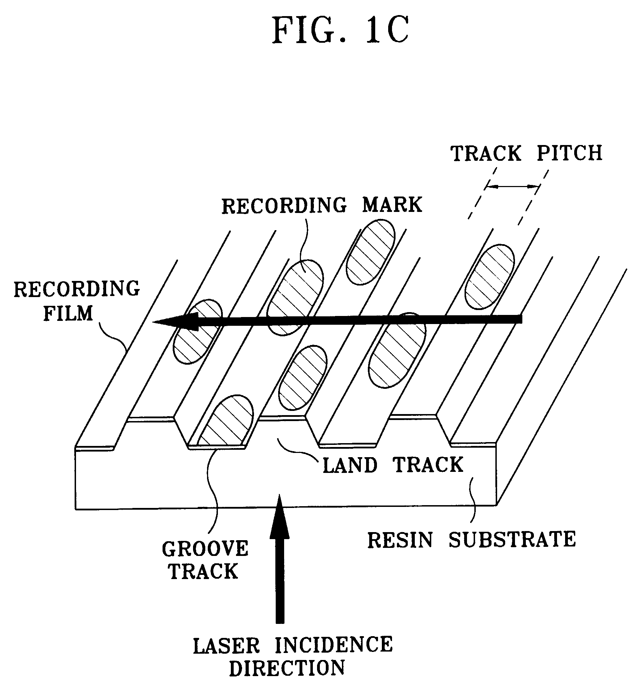

Figures 1A through 1C show the track structures of a CD, a DVD-ROM and a DVD-RAM, respectively. In the CD of Figure 1A and the DVD-ROM of Figure 1B, a pit is engraved by approximately $0.1\mu m$ in a helical fashion from the centre of the disc on a single mirror plane. Here, a track pitch is about $1.6\mu m$ in case of a CD and about $0.74\mu m$ in case of a DVD-ROM. The DVD-RAM of Figure 1C is configured as a land/groove track structure having a difference of about $6/\lambda$ deep. Data can be recorded on both the land and the groove. Since a recording method of the DVD-RAM adopts a change in phase, a data pit region does not have a physical depth as a CD or a DVD-ROM.

An optical disc reproduction apparatus which can reproduce a CD, a DVD-ROM and a DVD-RAM having a respectively different track structure as described above should discriminate whether a loaded disc is a DVD-RAM, a DVD-ROM or a CD prior to reproducing a signal from the loaded disc.

Thus, it is an aim of embodiments of the present invention to provide an optical disc discrimination apparatus and method for discriminating a type of a disc according to a difference in amplitude of an envelope waveform of a radio frequency (RF) signal read from the disc at the state where only a focusing is performed.

According to a first aspect of the present invention, there is provided An optical disc discrimination apparatus for use in an optical disc reproducer which can reproduce a plurality of discs with a single optical pickup, the optical disc discrimination apparatus comprising:a RF envelope generator for detecting an envelope signal from an RF signal read from a loaded disc; and a controller for detecting the amplitude of the envelope signal detected by the RF envelope generator at an off-track state, and discriminating a type of the disc using the detected amplitude.

Preferably, said RF envelope generator detects an envelope signal by a peak hold and a bottom hold of the RF signal read from said disc.

Preferably, said off-track state is a state where only a focusing is accomplished before a tracking control is performed.

Preferably, said controller comprises: an envelope amplitude detector for detecting the amplitude of the envelope signal detected from said RF envelope generator ;and a disc discriminator for comparing the level of the amplitude detected in the envelope amplitude detector with a predetermined reference level and discriminating whether the disc is a CD, a DVD-ROM, or a DVD-RAM, based on the comparison result.

Preferably, said envelope amplitude detector samples the envelope signal between a maximum value and a minimum value into n sample signals at a zero cross interval, and obtains an average value of the obtained n peak-to-peak values.

Preferably, said reference levels are set based on the fact that a CD has a track pitch relatively larger than a DVD-ROM, thus having a larger change in the amplitude of the RF signal, and that a DVD-RAM has no change in the amplitude of the RF signal.

Preferably, said disc discriminator discriminates whether: a loaded disc is a CD if the level of the detected envelope amplitude is larger than a first reference level; the loaded disc is a DVD-ROM if the detected envelope amplitude is smaller than the first reference level and larger than a second reference level; and the loaded disc is a DVD-RAM if the detected envelope amplitude is smaller than the second reference level.

According to a second aspect of the invention, there is provided an optical disc discrimination method for discriminating a type of a disc for use in an optical disc reproducer which can reproduce a plurality of discs with only a single optical pickup, the optical disc discrimination method comprising the steps of: (a)obtaining an envelope signal from a RF signal detected from a loaded disc at an off-track state of the disc;(b) detecting the amplitude of the envelope signal obtained in step (a);(c)comparing the amplitude of the envelope signal detected in step (b) with a predetermined reference level; and(d) discriminating whether the disc is a CD, a DVD-ROM, or a DVD-RAM based on the comparison result of step (c).

Preferably, said step (b) comprises the substeps of sampling the envelope signal obtained in step (a) between a maximum value and a minimum value into a predetermined number of sample signals at a zero cross interval, and detecting the obtained predetermined number of the peak-to-peak values and obtaining an average value of the detected peak-to-peak values to thereby detect an amplitude.

Preferably, said reference levels of step (c) are used for discriminating a CD, a DVD-ROM or a DVD-RAM each of which change in the RF signal amplitude differs from each other, a first reference level is larger than the amplitude of the RF signal detected from the CD, and a second reference level is smaller than the first reference level and larger than the amplitude of the RF signal detected from the DVD-ROM.

Preferably, in said step (d), it is discriminated that:a loaded disc is a CD if the amplitude of the envelope signal detected from the RF signal is larger than a first reference level; the loaded disc is a DVD-ROM if the envelope signal is smaller than the first reference level and larger than a second reference level; and the loaded disc is a DVD-RAM if the envelope signal is smaller than the second reference level.

For a better understanding of the invention, and to show how embodiments of the same may be carried into effect, reference will now be made, by way of example, to the accompanying diagrammatic drawings in which:

Figures 1A through 1C show the track structures of a CD, a DVD-ROM and a DVD-RAM, respectively;

Figure 2 shows a configuration of an optical disc discrimination apparatus according to a preferred embodiment of the present invention;

Figures 3A through 3C are waveform diagrams of a RF signal read from each disc of Figures 1A through 1C at an off-track state; and

Figures 4A through 4C are waveform diagrams of an envelope signal detected from each RF signal of Figures 3A through 3C.

A preferred embodiment of the present invention will be described with reference to the accompanying drawings.

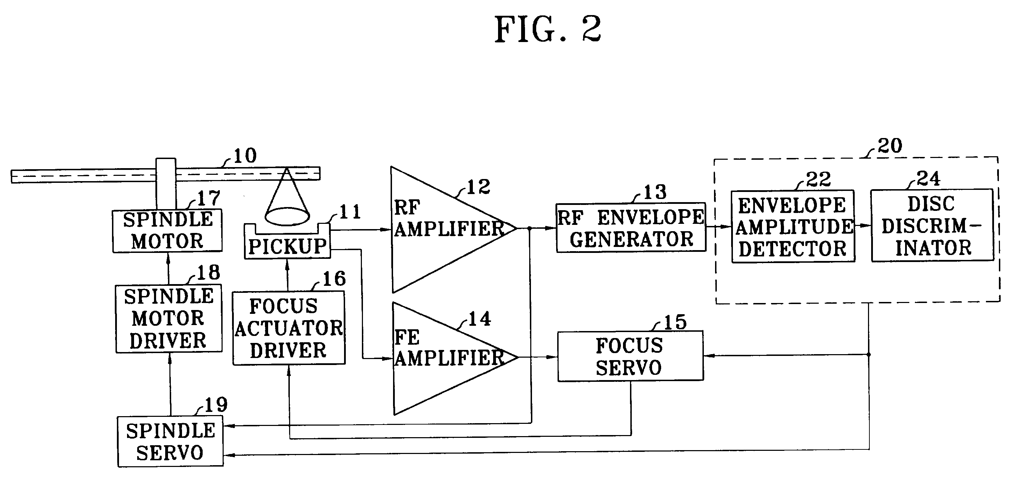

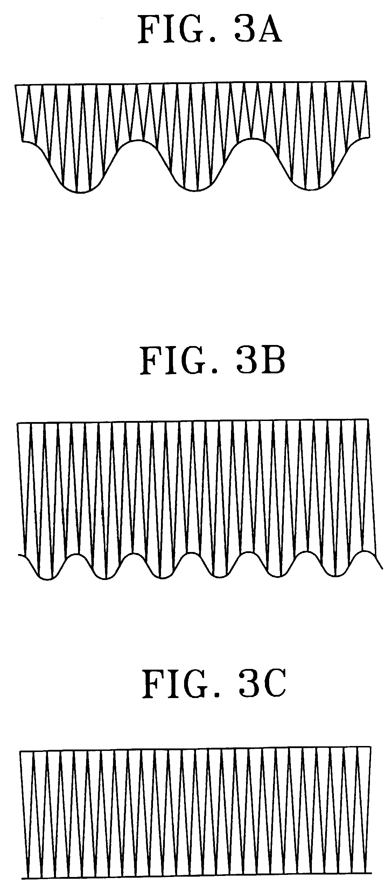

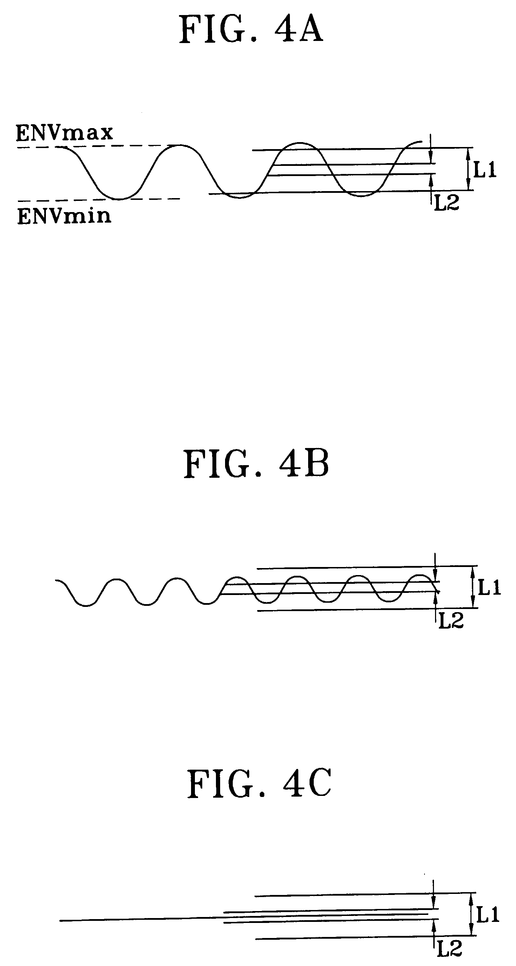

Figure 2 shows a configuration of an optical disc discrimination apparatus according to a preferred embodiment of the present invention. The apparatus shown in Figure 2 includes an optical pickup 11 for reading out a signal from an optical disc 10 loaded on a disc drive (not shown), and an RF amplifier 12 for amplifying an RF signal which is a high-frequency signal read through the optical pickup 11. An RF envelope generator 13 receives an RF signal amplified in the RF amplifier 12 and detects and generates an envelope. The apparatus of Figure 2 also includes a focus error (FE) amplifier 14 for amplifying a FE signal detected from the RF signal through the optical pickup 11, and a focus servo 15 for receiving the amplified FE signal from the FE amplifier 14 and generating a control signal for a focus servo control operation. A focus actuator driver 16 drives a focus actuator in the optical pickup 11 in correspondence to the focus servo control signal. Meanwhile, the Figure 2 apparatus includes a spindle servo 19 for generating a control signal for a rotation control operation of the optical disc 10 by means of a reproduction clock of the RF amplifier 12 and a spindle motor driver 18 for driving a spindle motor 17 for rotating the optical disc 10 in correspondence to the rotation control signal of the spindle servo 19. A controller 20 controls the entire operation of the focus servo 15 and the spindle servo 19. The controller 20 includes an envelope amplitude detector 22 for receiving the RF envelope signal generated from the RF envelope generator 13 via an analogue-to-digital converter (not shown) and detecting an amplitude of the received RF envelope signal, and a disc discriminator 24 for discriminating a type of the disc using the amplitude of the RF envelope signal detected from the envelope amplitude detector 22. The optical disc discrimination operation of the Figure 2 apparatus having the above configuration will be described in more detail with reference to Figures 3A through 3C and Figures 4A through 4C.

When an optical disc such as a CD, a DVD-ROM or a DVD-RAM is loaded, the controller 20 applies a command for controlling a servo operation to the focus servo 15 and the spindle servo 19. The spindle servo 19 drives the spindle motor driver 18 by the command of the controller 20 to rotate the spindle motor 17 at a constant angular velocity and to then rotate the optical disc 10 at a constant velocity. The focus servo 15 drives the focus actuator driver 16 by the command of the controller 20 to move an objective lens in the optical pickup 11 up and down and perform a focusing by trying a focus-in operation. Here, the controller 20 controls rotation of the optical disc 10 so that it is not fast, to thereby maintain a focusing state with respect to all types of reproducible discs.

The optical pickup 11 reads a RF signal from a rotating optical disc 10 and outputs the read RF signal to the RF amplifier 12. The RF amplifier 12 amplifies the input RF signal at a predetermined magnitude and then outputs it to the RF envelope generator 13. The output of the RF amplifier 12 is shown in Figures 3A through 3C.

Figures 3A through 3C are waveform diagrams of an RF signal read from each disc of Figures 1A through 1C and amplified in the RF amplifier 12 at an off-track state. Here, the off-track state means a state where only a focusing is performed before a tracking control is performed. At the off-track state, an optical beam traverses a plurality of tracks during a single rotation of a disc according to an amount of eccentricity of the disc. In the case that a reliability problem is raised due to a small amount of eccentricity of the disc, a sled can be moved so that an optical beam traverses a plurality of tracks.

In this embodiment, a laser wavelength is initialized into 635-650nm for use in a DVD so that a loaded disc has substantially the same beam spot size irrespective of the fact that the loaded disc is a CD or a DVD-ROM. Here, since the track pitch of the CD is not less than twice that of the DVD-ROM referring to Figures 1A and 1B, an amount of RF signals of the adjacent tracks, which is detected when a beam spot is positioned between the tracks in case of a CD becomes relatively smaller than that in case of a DVD-ROM. In case of both a CD and a DVD-ROM, the amplitude of the RF signal becomes large in a track area where data pits exist, and becomes small between the tracks, referring to Figures 3A and 3B. Meanwhile, data is recorded on both a land and a groove in case of a DVD-RAM. When a depth between a land and a groove is $6/\lambda$, cross-talk can be minimized. Accordingly, although an optical beam traverses each track, there is no change in the amplitude of the RF signal referring to Figure 3C.

As described above, the amplitude of the RF signal varies according to the type of the disc. Embodiments of the present invention discriminate disc type using the above feature.

The RF envelope generator 13 detects an envelope signal by a peak hold and a bottom hold of the input RF signal, and outputs the detected result to the controller 20. The controller 20 converts the input analogue envelope signal into a digital form via an analogue-to-digital converter (not shown) and applies the converted result to the envelope amplitude detector 22. The envelope amplitude detector 22 samples the envelope signal between a maximum value ENVmax and a minimum value ENVmin into n sample signals at a zero cross interval of the applied envelope signal. The envelope amplitude detector 22 detects the magnitude of the n peak-to-peak value of the sample envelope signal, and then obtains an average value ENVp-p, which is expressed by the following equation (1).

$$ENVp\text{-}p = \frac{\Sigma[ENV\max - ENV\min]}{n} \qquad (1)$$

The envelope amplitude detector 22 outputs the average value ENVp-p obtained using the above equation (1) to a disc discriminator 24. The disc discriminator 24 compares an average value ENVp-p of the input envelope amplitude with predetermined reference levels, to perform discrimination of the disc. Here, the predetermined reference levels are used for discriminating a CD, a DVD-ROM or a DVD-RAM each of which having RF signal amplitude values which differ from each other, and are set as shown in Figure 4. The disc discriminator 24 compares the average value ENVp-p of the detected envelope amplitude with a first reference level L1. In the result of comparison, if the average value ENVp-p of the envelope amplitude is larger than the first reference level L1 as shown in Figures 4A, that is, ENVp-p > L1, it is discriminated that the currently loaded disc is a CD. If the average value ENVp-p of the envelope amplitude is smaller than the first reference level L1, the disc discriminator 24 compares the average value ENVp-p of the envelope amplitude with a second reference level L2. In the result of the comparison, if the average value ENVp-p of the envelope amplitude is larger than the second reference level L2 as shown in Figure 4B, that is, L1>ENVp-p>L2, it is discriminated that the currently loaded disc is a DVD-ROM. In the result of comparison, if the average value ENVp-p of the envelope amplitude is smaller than the second reference level L2 as shown in Figure 4C, that is, L2>ENVp-p, it is discriminated that the currently loaded disc is a DVD-RAM. Here, the first reference level L1 is larger than the second reference level L2. The controller 20 controls the entire system so that a reproduction operation corresponding to a loaded disc can be performed according to a disc type discrimination result of the disc discriminator 24.

In addition to the above embodiment, a digital servo circuit including an analog-to-digital converter and a digital signal processor DSP detects the amplitude of the RF envelope signal and then transmits the amplitude data or an optical disc discrimination result to a controller such as a microcomputer.

As described above, the optical disc discrimination apparatus and method can discriminate whether the type of a loaded disc is a DVD-RAM, a DVD-ROM or a CD accurately and simply through a method of measuring the amplitude of the RF envelope at the state where only a focusing is accomplished when the loaded disc is loaded on a DVD-RAM drive.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

**Claims**

1. An optical disc discrimination apparatus for use in an optical disc reproducer which can reproduce a plurality of discs with a single optical pickup, the optical disc discrimination apparatus comprising:

a RF envelope generator (13) for detecting an envelope signal from an RF signal read from a loaded disc; and

a controller (20) for detecting the amplitude of the envelope signal detected by the RF envelope generator (13) at an off-track state, and discriminating a type of the disc using the detected amplitude.

2. The optical disc discrimination apparatus of claim 1, wherein said RF envelope generator (13) detects an envelope signal by a peak hold and a bottom hold of the RF signal read from said disc.

3. The optical disc discrimination apparatus of claim 1 or 2, wherein said off-track state is a state where only a focusing is accomplished before a tracking control is performed.

4. The optical disc discrimination apparatus of claim 1,2 or 3, wherein said controller (20) comprises:

an envelope amplitude detector (22) for detecting the amplitude of the envelope signal detected from said RF envelope generator (13); and
a disc discriminator (24) for comparing the level of the amplitude detected in the envelope amplitude detector (22) with a predetermined reference level and discriminating whether the disc is a CD, a DVD-ROM, or a DVD-RAM, based on the comparison result.

5. The optical disc discrimination apparatus of claim 4, wherein said envelope amplitude detector (22) samples the envelope signal between a maximum value and a minimum value into n sample signals at a zero cross interval, and obtains an average value of the obtained n peak-to-peak values.

6. The optical disc discrimination apparatus of claim 4 or 5, wherein said reference levels are set based on the fact that a CD has a track pitch relatively larger than a DVD-ROM, thus having a larger change in the amplitude of the RF signal, and that a DVD-RAM has no change in the amplitude of the RF signal.

7. The optical disc discrimination apparatus of claim 6, wherein said disc discriminator (24) discriminates whether:

a loaded disc is a CD if the level of the detected envelope amplitude is larger than a first reference level;

the loaded disc is a DVD-ROM if the detected envelope amplitude is smaller than the first reference level and larger than a second reference level; and

the loaded disc is a DVD-RAM if the detected envelope amplitude is smaller than the second reference level.

8. An optical disc discrimination method for discriminating a type of a disc for use in an optical disc reproducer which can reproduce a plurality of discs with only a single optical pickup, the optical disc discrimination method comprising the steps of:

(a) obtaining an envelope signal from a RF signal detected from a loaded disc at an off-track state of the disc;

(b) detecting the amplitude of the envelope signal obtained in step (a);

(c) comparing the amplitude of the envelope signal detected in step (b) with a predetermined reference level; and

(d) discriminating whether the disc is a CD, a DVD-ROM, or a DVD-RAM based on the comparison result of step (c).

9. The optical disc discrimination method of claim 8, wherein said step (b) comprises the sub-steps of sampling the envelope signal obtained in step (a) between a maximum value and a minimum value into a predetermined number of sample signals at a zero cross interval, and detecting the obtained predetermined number of the peak-to-peak values and obtaining an average value of the detected peak-to-peak values to thereby detect an amplitude.

10. The optical disc discrimination method of claim 8, wherein said reference levels of step (c) are used for discriminating a CD, a DVD-ROM or a DVD-RAM each of which change in the RF signal amplitude differs from each other,

a first reference level is larger than the amplitude of the RF signal detected from the CD, and

a second reference level is smaller than the first reference level and larger than the amplitude of the RF signal detected from the DVD-ROM.

11. The optical disc discrimination method of claim 10, wherein in said step (d), it is discriminated that:

a loaded disc is a CD if the amplitude of the envelope signal detected from the RF signal is larger than a first reference level;

the loaded disc is a DVD-ROM if the envelope signal is smaller than the first reference level and larger than a second reference level; and

the loaded disc is a DVD-RAM if the envelope signal is smaller than the second reference level.

# FIG. 1A

0.5μm

LASER INCIDENCE
DIRECTION

1.2mm

0.1μm

1.60μm

# FIG. 1B

PIT

LASER INCIDENCE
DIRECTION

0.3μm

0.1μm

0.74μm

0.6mm

# FIG. 1C

# FIG. 2

EP 1 041 553 A1

# FIG. 3A

# FIG. 3B

# FIG. 3C

# FIG. 4A

ENVmax

ENVmin

L1
L2

# FIG. 4B

L1
L2

# FIG. 4C

L1
L2

**European Patent Office**

# EUROPEAN SEARCH REPORT

**Application Number**

EP 00 30 2237

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 684 773 A (HAYASHI HIDEKI) 4 November 1997 (1997-11-04) * column 2, line 13 - column 2, line 22 * * column 2, line 32 - column 2, line 37 * * column 2, line 54 - column 2, line 62; claims 1,7-9 * | 1,4,8,10 | G11B19/12 |
| X | EP 0 520 461 A (KENWOOD CORP) 30 December 1992 (1992-12-30) * abstract; claims 1-4 * | 1-3,8 | |
| A | | 4,7,10, 11 | |
| X | EP 0 453 995 A (SONY CORP) 30 October 1991 (1991-10-30) * the whole document * | 1-3,8 | |
| A | | 4,7,10, 11 | |
| X | PATENT ABSTRACTS OF JAPAN vol. 1999, no. 02, 26 February 1999 (1999-02-26) & JP 10 312629 A (SANYO ELECTRIC CO LTD), 24 November 1998 (1998-11-24) * abstract * | 1,2,4,8, 10 | |
| P,X | EP 0 926 662 A (SHARP KK) 30 June 1999 (1999-06-30) * the whole document * | 1-11 | |

**TECHNICAL FIELDS SEARCHED (Int.Cl.7)**

G11B

The present search report has been drawn up for all claims

| Place of search | Date of completion of the search | Examiner |
|---|---|---|
| THE HAGUE | 13 July 2000 | Benfield, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 041 553 A1

ANNEX TO THE EUROPEAN SEARCH REPORT
ON EUROPEAN PATENT APPLICATION NO.

EP 00 30 2237

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2000

| Patent document cited in search report | | Publication date | Patent family member(s) | | Publication date |
|---|---|---|---|---|---|
| US 5684773 | A | 04-11-1997 | JP | 8329472 A | 13-12-1996 |
| EP 0520461 | A | 30-12-1992 | NONE | | |
| EP 0453995 | A | 30-10-1991 | JP | 4011325 A | 16-01-1992 |
| | | | DE | 69110533 D | 27-07-1995 |
| | | | DE | 69110533 T | 30-11-1995 |
| | | | US | 5175719 A | 29-12-1992 |
| JP 10312629 | A | 24-11-1998 | NONE | | |
| EP 0926662 | A | 30-06-1999 | JP | 11176070 A | 02-07-1999 |
| | | | CN | 1220444 A | 23-06-1999 |

EPO FORM P0459

For more details about this annex : see Official Journal of the European Patent Office, No. 12/82

13